# EUROPEAN PATENT APPLICATION

(11) **EP 3 034 947 A1**
(43) Date of publication of application: **22.06.2016**
(21) Application number: 15200168.1
(22) Date of filing: 15.12.2015
(51) Int. Cl.: F24C 15/00, A47J 37/07, F21V 33/00

(54) **A COOKING DEVICE HAVING A COVERING ELEMENT FIXED TO AN UPPER PROFILE**

(30) Priority: 17.12.2014 TR 201415347
(71) Applicant: BSH Hausgeräte GmbH, 81739 München (DE)
(72) Inventor: Atabay, Emrah, 59500 TEKIRDAG (TR); Atalay, Engin, 59500 TEKIRDAG (TR); Cosar, Sevgi, 34520 ISTANBUL (TR)

(57) **Abstract**

The invention relates to a cooking device (1) comprising a cooktop (13) with a plate (14); a cover (19) hinged to the plate (14) in order to be rotated between a closed position covering the plate (14) and an open position lifted upwardly from the plate (14); a hollow upper profile (23) mounted to an upper edge (191) in the open position of the cover (19) and having a functional element (20) which is positioned therein and functions by means of electrical power, characterized in that the cooking device (1) comprises a covering element (4) covering an opening (231) on at least one of the hollow upper profile (23) ends.

## Description

### TECHNICAL FIELD

The present invention relates to cooking devices having a functional element like an illumination element positioned on an upper profile and which functions by means of electrical power, and electrical transmission elements providing power transmission to said functional element.

### KNOWN STATE OF THE ART

Cooking devices can be in the form of a standalone cooktop or an oven with cooktop where there is a cooktop integrated to an oven. Said cooktops have a cover which provides covering while the cooktop is not in use or which is kept open while the cooktop is in use. The cover is in general manufactured from ceramic materials and particularly it is manufactured from glass materials.

On the cooking devices provided in the present art, cables are used for transmitting electrical power to the sections where electrical power is required. The electrical power, applied from a power supply, is in general transmitted by means of electrical cables to a functional element which is to be operated by means of electrical power. There are embodiments where the functional element is an illumination element positioned on the upper profile of the cover. In an open position of the cover, the upper side of the cooktop plate can be illuminated by means of the illumination element provided on the upper plate.

Another embodiment provided in the present art and having an electrical transmission element except cable is described in the patent TR201408916. This embodiment relates to a cooking device comprising a body, at least one functional element positioned on said body, a ceramic based panel positioned at the outer section of the body. The cooking device comprises at least one conductive strip passed through the ceramic based panel so as to provide electrical transmission to the functional element through the ceramic based panel. The conductive strips are positively or negatively electrically charged. The functional element can be a motor or an illumination element which can function at low voltages. As can be seen in the present art, the functional element is an illumination element which illuminates the upper plate of the cooktop.
Another embodiment provided in the present art can be seen in the patent document GB2143029. In said embodiment, a cooking hob includes a cover pivotable between a horizontal position, covering a top surface of the hob and an upright position in which the top surface is exposed. A fluorescent light is mounted on the cover adjacent a front edge thereof and can illuminate the top surface whenever the cover is in the upright position.

### BRIEF DESCRIPTION OF THE INVENTION

The object of the present invention is to provide protection of the functional element, positioned inside the upper profile, from the external factors.

In order to realize said object, the present invention relates to a cooking device comprising a cooktop with a plate; a cover hinged to the plate in order to be rotated between a closed position covering the plate and an open position lifted upwardly from the plate; a hollow upper profile mounted to an upper edge in the open position of the cover and having a functional element which is positioned therein and functions by means of electrical power. The cooking device comprises a covering element covering an opening on at least one of the hollow upper profile ends. Thus, the opening of the hollow upper profile is covered, and the functional element, positioned inside the upper profile, is protected from the external factors. In a probable embodiment of the present invention, the functional element is an illumination element or a piece of the illumination element like for instance a light source. Moreover, the functional element can be a sensor, a signal device or a motor which functions at low voltage. The opening is the part which stays exposed during the production of the upper profile. A side face of a hollow metal profile is in the form of an opening at both ends.

In a probable embodiment of the present invention, the cooking device comprises one each covering element covering the openings existing at both ends of the hollow upper profile. Thus, the openings provided on both side sections of the upper profile and which are accessible from the outside are covered by covering elements.

In another probable embodiment of the present invention, the covering element is made of an electrically insulating material. Thus, by means the insulating element, insulation is provided on the sections of the upper profile which are accessible from outside.

In a probable embodiment of the present invention, the cooking device comprises at least one electrical transmission element positioned on the cover and extending from the cover towards an inner section of the upper profile. Thus, electrical transmission is provided to the functional element.

In a probable embodiment of the present invention, the electrical transmission element, positioned on the cover, is a conductive strip. Thus, electrical current is provided through the cover by means of conductive strips. The conductive strips are selected from metal materials having electrical conductivity. In a probable embodiment of the present invention, the conductive strip is positively or negatively electrically charged.

In a probable embodiment of the present invention, the cooking device comprises at least one electrical transmission element positioned inside the inner section of the upper profile in order to provide electrical transmission to the functional element. Thus, electrical transmission is provided to the function element. The electrical transmission element is preferably a cable.

In a probable embodiment of the present invention, the cooking device comprises an electrical terminal provided at the inner section of the upper profile close to the opening and connecting one end of the electrical transmission element, extending through the cover, to the one end of the electrical transmission element provided inside the upper profile. Thus, two separate electrical transmission elements, extending through the cover and provided at the inner section of the upper profile, are connected to each other so as to continue electrical transmission.

In a probable embodiment of the present invention, the covering element comprises a housing wherein the electrical terminal is placed. Thus, the electrical terminal is positioned on the covering element.

In a probable embodiment of the present invention, the housing is embodied so as to prevent contact of the electrical terminal to the upper profile. Thus, it prevents the contact of the electrical terminal of the housing of the insulating covering element to the upper profile, and it prevents the short circuit of the system providing power to the functional element, or it prevents damaging of the power supply.

In a probable embodiment of the present invention, the covering element comprises an insert section which is fixed by means of insertion towards the inner section through the opening of the upper profile. Thus, the covering element is fixed to the upper profile such that a section thereof is hidden inside the upper profile. The insert section is shrink-fit to the opening of the upper profile.

In a probable embodiment of the present invention, the covering element comprises a slit formed on the insert section and which engages to an extension of the upper profile. Thus, the covering element is fixed to the upper profile.

In a probable embodiment of the present invention, the covering element comprises a rear wall embodied so as to stay at a rear side of a rear wall of the upper profile in the closed position of the cover. Thus, a section on the rear wall of the upper profile, where the electrical transmission element is provided and where the user may contact, is insulated.

In a probable embodiment of the present invention, the covering element comprises a side wall covering the opening of the upper profile. Thus, the opening of the upper profile is completely covered, and the function element is protected against external factors.

In a probable embodiment of the present invention, the covering element comprises a support section extending so as to make a protrusion from a lower wall of the covering element in the closed position of the cover. Thus, in a closed position of the cover on the cooktop plate, the contact of the cover to the plate or the hitting thereof to the plate is prevented, and moreover the cover is supported. Moreover, since the upper profile is made of a metal material, the risk of electrical current flow through the upper profile to the plate is prevented.

In a probable embodiment of the present invention, the covering element and the support section of the covering element are embodied so as to stay behind a front wall of the upper profile and a front wall extension in the closed position of the cover. Thus, in a closed position of the cover on the cooktop plate, the covering element is not visible when the cooking device is viewed frontally, and an aesthetical appearance is provided.

### BRIEF DESCRIPTION OF THE FIGURES

- Figure 1: is a frontal perspective view of the covering element where the cooktop plate cover is in an open position.
- Figure 2: is a frontal perspective view of the covering element where the cooktop plate cover is in an open position.
- Figure 3: is a rear perspective view of the covering element with respect to Figure 2 and 3.
- Figure 4: is a two dimensional view of an upper profile to which the covering element is to be fixed.
- Figure 5: is a partial frontal two dimensional view of the upper profile and cover where the electrical terminal and electrical transmission elements are provided.
- Cross section B-B': is a lateral two dimensional view, taken from Figure 5, of a section of the upper profile and the cooktop where no covering element is provided.
- Figure 6: is a partial frontal two dimensional view of the cover and the upper profile to which the covering element is fixed.
- Cross section C-C': is a lateral two dimensional view, taken from Figure 6, of a section of the cooktop and the upper profile whereon the covering element is mounted.
- Figure 7: is a lateral two dimensional view where the covering element is fixed to the upper profile of the cover of a closed plate of a cooktop in a probable embodiment of the present invention.
- Detail A: is a detailed view, taken from Figure 7, of a section of the plate, the upper profile and the covering element mounted to the upper profile.
- Figure 8: is a frontal perspective view of a cooking device.

### THE DETAILED DESCRIPTION OF THE INVENTION

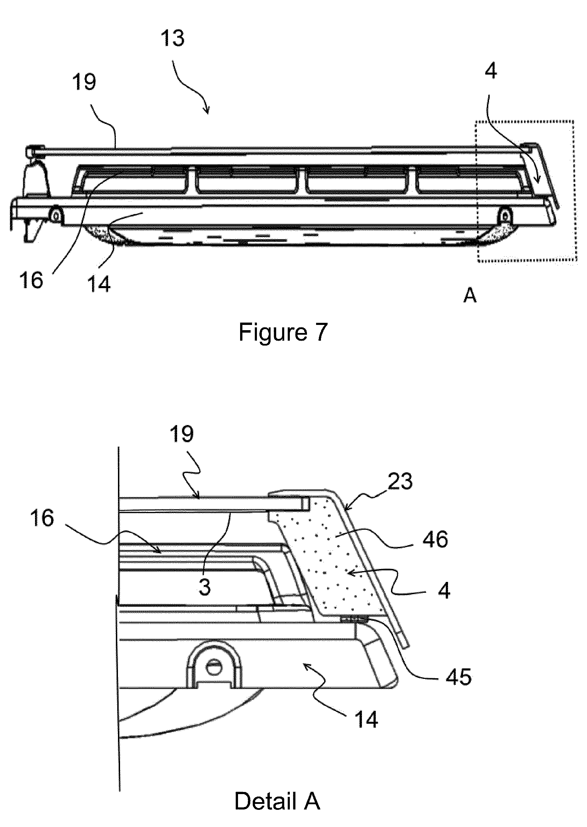

The present invention relates to a cooking device (1) comprising a cooktop (13) having a plate (14), a cover (19) hinged to the plate (14) in a rotatable manner between a closed position covering the plate (14) and an open position lifted upwardly from the plate (14), and a hollow upper profile (23) assembled to an upper edge (191) in the open position of the cover (19) and having a functional element (20) positioned therein and functioning by means of electrical power. The cooking device (1) comprises a covering element (4) covering an opening (231) provided on at least one of the ends of the hollow upper profile (23) (Figure 7, Detail A).

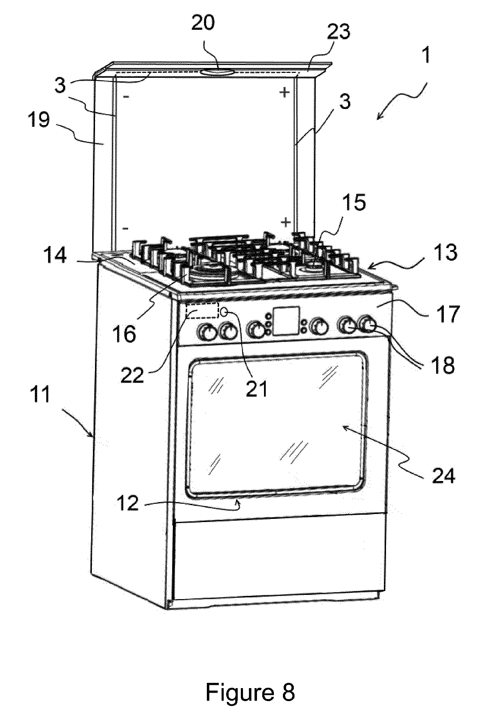

The cooking device (1) can be in the form of a standalone cooktop (13) or an oven having a cooking chamber (12). Or it may be in the form of an oven with cooktop where both are provided on the same body (11) (Figure 8). There is a plate (14) whereon the cooktop (13) of a cooking device (1) is assembled. The plate (14) is assembled onto the body (11), or it is integrated to the plate (14). There is a carrier grill (16) on the plate (14) which can carry the burners (15) and a cooking vessel. There is a control panel (17) on a front section of the body (11) which is easily accessible. On the control panel (17), buttons (18) are positioned which provide making the burner gas output setting or the required settings for the cooking chamber. In Figure 8, a cooking device (1) which is a probable embodiment of the present invention is illustrated. A triggering element (21) has been assembled in order to bring the functional element (20) into open or closed form. The triggering element (21) can be a touch-button or a mechanical button. Or instead of these, it can be an element which functions by means of audible command.

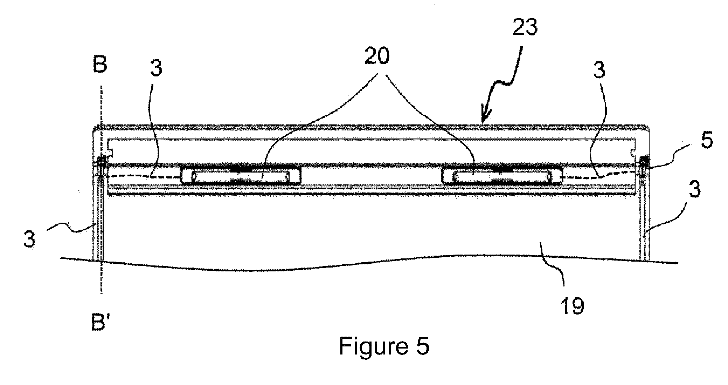

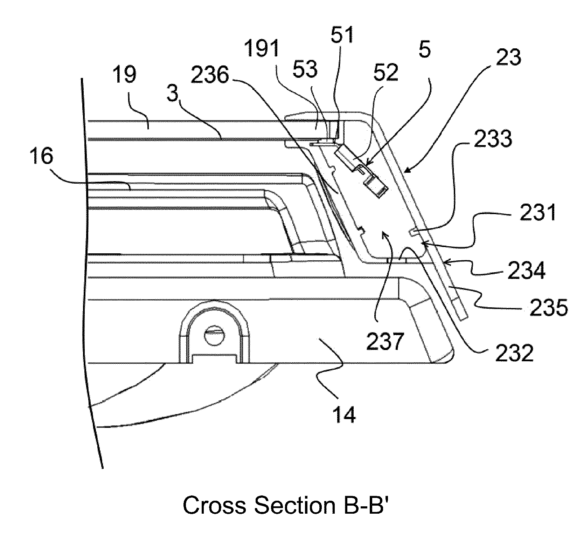

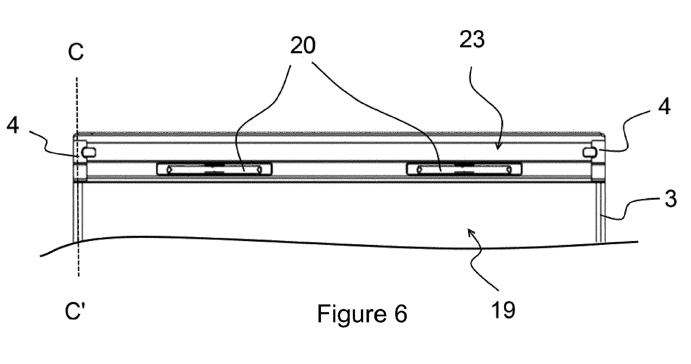

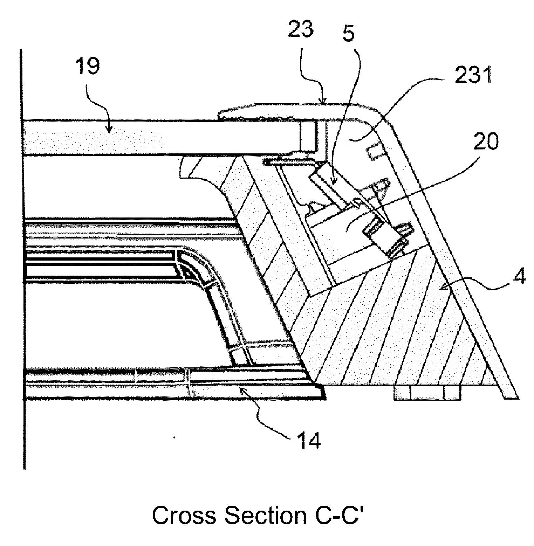

As can be seen in the given figures, the upper profile (23) has a hollow structure (Figure 5; cross section B-B', Figure 6; cross section C-C'). A hollow metal upper profile (23) is manufactured by means of a metal extrusion method, or it can be manufactured by means of other methods such that an inner section (237), which is in opening form, is obtained inside the metal profile. By means of this, the upper profile (23) has no side walls and these end sections are in the form of opening (231). The upper profile (23) is assembled to the upper edge (191) of the cover (19) of the plate (14), and it extends along the upper edge (191). The upper profile (23) has a front wall extension (235) extending to the front side of the plate (14) in a closed position (Figure 5, cross section B-B').

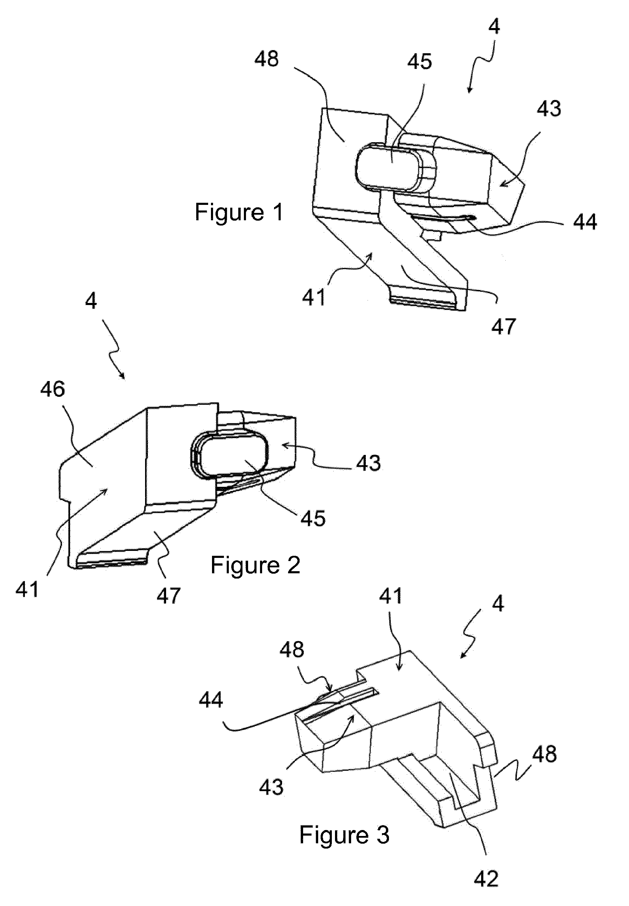

Figure 1 and 2 are the frontal perspective views where the covering element (4) is to be provided in an open position of the cover (19). Figure 3 is a rear perspective view of the covering element (4) with respect to Figure 2 and 3. The covering element (4) is made of an electrically insulating material. It is preferably made of silicon or flexible plastic or plastic derivative and preferably made of heat resistant material. The covering element (4) has a body (41) which is similar to letter "L". An electrical terminal (5), positioned in the inner section (237) of the upper profile (23), is placed to a housing (42) formed on the covering element (4). The housing (42) prevents the contact of the electrical terminal (5) to the upper profile (23). The covering element (4) has an insert section (43) which is inserted from the opening (231) of the upper profile (23) towards the inner section (237). A slit (44), formed on the insert section (43), engages to an extension (233) embodied at the inner section (237) of the upper profile (23). In an alternative embodiment of the present invention, one each mutual slits (44) can be formed on the insert section (43). In this embodiment, the slits (44) engage to the mutual extensions (233) of the upper profile (23), and thereby the covering element (4) is fixed to the upper profile (23). A support section (45) is formed on a bottom wall (48) of the body (41). The support section (45) engages to a cutout section (232) formed on the upper profile (23). A side wall (46) of the covering element (4) covers the opening (231) of the upper profile (23). Thus, the side wall (46) of the covering element (4) is a side wall of the upper profile (23) (Figure 7, Detail A). A rear wall (47) of the covering element (4) is embodied so as to stay at the rear side of a rear wall (236) of the upper profile (23) in the closed position of the cover (19). In the closed position of the cover (19), the wall, which is parallel with respect to the rear wall (236) of the upper profile (23), is a front wall (234). The front wall extension (235) is an extension extending from the front wall (234) to a front section of the plate (14).

The covering element (4) and the support section (45) of the covering element (4) are embodied so as to stay behind a front wall extension (235) and a front wall (234) of the upper profile (23) in the closed position of the cover (4).

At least one electrical transmission element (3) provides electrical transmission to the functional element (20) positioned on the upper profile (23). The electrical transmission elements (3) are positioned on the cover (19), and they extend from the cover (19) towards an inner section (237) of the upper profile (23). In an application of the present invention, the electrical transmission element (3), positioned on the cover (19), is a conductive strip comprising negative or positive charge with a voltage value between 0-60 volts. Thus, the power with low voltage which is needed for the operation of the functional element (20) can be provided. The cooking device (1) comprises an electronic card (22) transforming the current from AC to DC and connected to the conductive strip so as to transmit electrical current to the conductive strip. Thus, by means of the electronic card (22), when AC current is not desired to be used directly, it can be transformed into DC. In another probable embodiment of the present invention, the current passing through the conductive strips is DC. Thus, the current, provided by a direct current source or converter, can be directly used. The conductive strips are made of metal material comprising Ag ion.

The electrical transmission element (3), which provides electrical transmission towards the functional element (20) by passing through the inner section (237) of the upper profile (23), is a cable. The connection between the cable and the electrical transmission elements (3), which are in conductive strip form, is provided through the electrical terminal (5). Therefore, a conductive section of the conductive strip or the cable is soldered to a male element (51) of the electrical terminal (5). Thus, a solder section (53) is formed on the upper edge (191) of the door (19). One end of the male element (51) fixed to the upper edge (191) by means of a solder section (53) extends into a female element (52). Thus, the male element (51) is an end of the electrical transmission element (3) extending through the cover (19). One end of the electrical transmission element (3) existing inside the upper profile (23) is engaged into the female element (52) and it is connected to the male element (51).

In an application of the present invention, the functional element (20) is an illumination element. A light source (not illustrated in the figures) of the illumination element is completely provided in the inner section (237) of the upper profile (23), a diffuser section (not illustrated in the figures) can be viewed from the rear wall (47) of the upper profile (23). The illumination element is preferably a LED. Thus, in the open position of the cover (19), the upper side of the cover (19) and of the plate (14) can be illuminated through the upper profile (23).

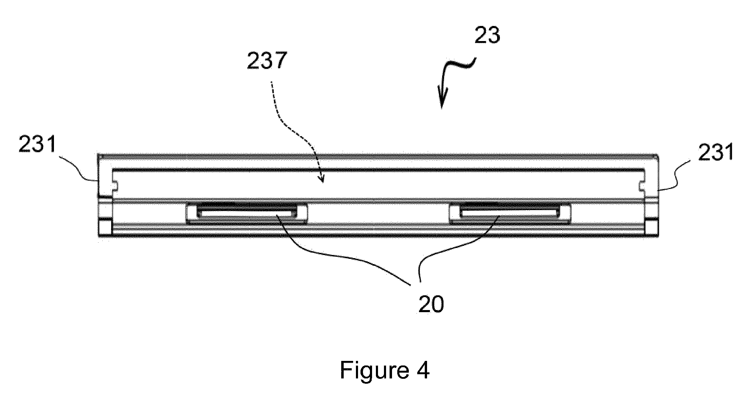

In more details, the operation of the present invention is as follows. The cooking device (1) comprises a covering element (4) covering an opening (231) provided on at least one of the ends of the hollow upper profile (23) (Figure 7, Detail A). The openings (231) are provided on both sides of the upper profile (23) (Figure 4). The object of the present invention is to provide protection of the functional element (20), positioned inside the upper profile (23), from the external factors. An electrical terminal (5) which is a combination point of the electrical transmission elements (3) providing electrical transmission to the functional element (20) is positioned inside a housing (42) formed on the covering element (4). By means of this, the electrical terminal (5) is prevented from contacting the upper profile (23) made of metal material. Moreover, the covering element (4) is made of an insulating material, and it provides electrical insulation between the electrical terminal (5) and the upper profile (23). In case the electrical terminal (5) contacts the upper profile (23), there is the risk of short circuit of the electrical circuit, or there is the risk of damaging of the power supply providing power. In a closed position of the cover (19), the support section (45) of the covering element (4) seats onto the plate (14), and the contact of the upper profile (23) to the plate (14) is prevented.

In an alternative embodiment of the present invention, the form of the covering element (4) can be changed. The insert section (43) of the covering element (4) provides the covering element (4) to be inserted and fixed through the opening (231) towards the inner section (237) of the upper profile (23). The side wall (46) of the covering element (4) completely covers the opening (231) of the upper profile (23).

In an alternative application of the present invention, the electrical transmission element (3), positioned on the cover (19), may be a cable.

**REFERENCE NUMBERS**

| | |
|---|---|
| **1**. Cooking device | |
| **11.** Body | **3**. Electrical transmission element |
| **12.** Cooking chamber | |
| **13.** Cooktop | **4**. Covering element |
| **14.** Plate | **41**. Body |
| **15.** Burner | **42**. Housing |
| **16.** Carrier grill | **43**. Insert section |
| **17.** Control panel | **44.** Slit |
| **18.** Button | **45**. Support section |
| **19.** Cover | **46**. Side wall |
| **191.** Upper edge | **47**. Rear wall |
| **20.** Functional element | **48**. Bottom wall |
| **21.** Triggering element | |
| **22.** Electronic card | **5.** Electrical terminal |
| | **51**. Male element |
| **23.** Upper profile | **52**. Female element |
| **231**. Opening | **53.** Soldering section |
| **232.** Cutout section | |
| **233**. Extension | |
| **234**. Front wall | |
| **235**. Front wall extension | |
| **236**. Rear wall | |
| **237**. Inner section | |

## Claims

1. A cooking device (1) comprising a cooktop (13) with a plate (14); a cover (19) hinged to the plate (14) in order to be rotated between a closed position covering the plate (14) and an open position lifted upwardly from the plate (14); a hollow upper profile (23) mounted to an upper edge (191) in the open position of the cover (19) and having a functional element (20) which is positioned therein and functions by means of electrical power, **characterized in that** the cooking device (1) comprises a covering element (4) covering an opening (231) on at least one of the hollow upper profile (23) ends.

2. The cooking device (1) according to claim 1; wherein the cooking device (1) comprises one each covering element (4) covering the openings (231) existing at both ends of the hollow upper profile (23).

3. The cooking device (1) according to anyone of the preceding claims; wherein the covering element (4) is made of an electrically insulating material.

4. The cooking device (1) according to anyone of the preceding claims; wherein the cooking device (1) comprises at least one electrical transmission element (3) positioned on the cover (19) and extending from the cover (19) towards an inner section (237) of the upper profile (23), in order to provide electrical transmission to the functional element (20).

5. The cooking device (1) according to claim 4; wherein the electrical transmission element (3), positioned on the cover (19), is a conductive strip.

6. The cooking device (1) according to anyone of the preceding claims; wherein the cooking device (1) comprises at least one electrical transmission element (3) positioned inside the inner section (237) of the upper profile (23) in order to provide electrical transmission to the functional element (20).

7. The cooking device (1) according to any one of the claims between claim 4 and 6; wherein the cooking device (1) comprises an electrical terminal (5) provided at the inner section (237) of the upper profile (23) close to the opening (231) and connecting one end of the electrical transmission element (3), extending from the cover (19), to the one end of the electrical transmission element (3) provided inside the upper profile (23).

8. The cooking device (1) according to claim 7; wherein the covering element (4) comprises a housing (42) wherein the electrical terminal (5) is placed.

9. The cooking device (1) according to claim 8; wherein the housing (42) is embodied so as to prevent contact of the electrical terminal (5) to the upper profile (23).

10. The cooking device (1) according to anyone of the preceding claims; wherein the covering element (4) comprises an insert section (43) which is fixed by means of insertion towards the inner section (237) through the opening (231) of the upper profile (23).

11. The cooking device (1) according to claim 10; wherein the covering element (4) comprises a slit (44) formed on the insert section (43) and engaging to an extension (233) provided in the inner section (237) of the upper profile (23).

12. The cooking device (1) according to anyone of the preceding claims; wherein the covering element (4) comprises a rear wall (47) embodied so as to stay at a rear side of a rear wall (236) of the upper profile (23) in the closed position of the cover (19).

13. The cooking device (1) according to anyone of the preceding claims; wherein the covering element (4) comprises a side wall (46) covering the opening (231) of the upper profile (23).

14. The cooking device (1) according to anyone of the preceding claims; wherein the covering element (4) comprises a support section (45) extending so as to make a protrusion from a bottom wall (48) of the covering element (4) in the closed position of the cover (19).

15. The cooking device (1) according to anyone of the preceding claims; wherein the covering element (4) and the support section (45) of the covering element (4) are embodied so as to stay behind a front wall (234) of the upper profile (23) and a front wall extension (235) in the closed position of the cover (19).
